Europäisches Patentamt

European Patent Office

Office européen des brevets

(11) Veröffentlichungsnummer: **0 453 751 A1**

## (12) EUROPÄISCHE PATENTANMELDUNG

(21) Anmeldenummer: 91103964.2

(22) Anmeldetag: 14.03.91

(51) Int. Cl.5: **B05D 1/06**, B05B 15/04

(30) Priorität: 24.04.90 DE 4013063

(43) Veröffentlichungstag der Anmeldung:
30.10.91 Patentblatt 91/44

(84) Benannte Vertragsstaaten:
AT BE CH DK ES FR GB IT LI NL SE

(71) Anmelder: METRI AIRFLUID AG
Kesselbachstrasse 42
CH-9450 Altstätten(CH)

(72) Erfinder: Krämer, Erich
Hüllreuthstrasse 18
W-8626 Michelau(DE)

(74) Vertreter: Münzhuber, Robert, Dipl.-Phys. et al
Patentanwalt Rumfordstrasse 10
W-8000 München 5(DE)

(54) Verfahren und Einrichtung zum elektrostatischen Beschichten von Werkstücken mit Pulver.

(57) Es werden ein Verfahren und eine Einrichtung zum elektrostatischen Beschichten von Werkstücken mit Pulver geschaffen, wobei die Werkstücke an mehreren nacheinander angeordneten Sprühpistolen vorbeigeführt werden und versprühtes Überschußpulver für eine erneute Versprühung rückgeführt wird. Zumindest die zuerst von den Werkstücken erreichte Sprühpistole wird dabei mit rückgeführtem Pulver gespeist, zumindest die zuletzt von den Werkstücken erreichte Sprühpistole mit frischem Pulver. Der mit Frischpulver gespeisten Sprühpistole wird ein Pulver-Luft-Gemisch vergleichsweise geringen Luftanteils und geringer Geschwindigkeit zugeführt.

EP 0 453 751 A1

Die Erfindung betrifft ein Verfahren und eine Einrichtung zum elektrostatischen Beschichten von Werkstücken mit Pulver, bei dem die Werkstücke an mehreren nacheinander angeordneten, mit einem Pulver-Luft-Gemisch gespeisten Sprühpistolen vorbeigeführt werden und versprühtes Überschußpulver für eine erneute Versprühung rückgeführt wird. Derartige Verfahren und Einrichtungen sind allgemein bekannt und werden im großen Umfang durchgeführt bzw. verwendet.

Bei den bekannten derartigen Verfahren und Einrichtungen wird meist so vorgegangen, daß die Werkstücke, beispielsweise an einer Kette hängend, durch eine Sprühkabine hindurchbewegt werden. In der Sprühkabine befinden sich mehrere Sprühpistolen in Hintereinander-Anordnung, so daß das jeweilige Werkstück nacheinander mehreren Sprühstrahlen ausgesetzt wird, bis nach dem Vorbeifahren des Werkstücks an der letzten Sprühpistole die gewünschte Schichtdicke des Pulverauftrags erreicht ist. Das dabei in vergleichsweise großen Mengen anfallende Überschußpulver, also versprühtes Pulver, das nicht an dem Werkstück haften bleibt, wird sofort "kontinuierlich" und/oder bei einem Farbwechsel aus der Kabine ausgetragen, in Behältern gesammelt und wieder verwendet (Recycling). Durch dieses Recycling werden zwar die Pulververluste minimiert, jedoch ergeben sich auch Nachteile. So ist es selbst bei sehr gründlicher Säuberung der Kabine bei jedem Farbwechsel nicht zu vermeiden, insbesondere bei häufigem Farbwechsel, daß in das rückgeführte Pulver Pulverpartikel einer anderen, von einem früheren Beschichtungsvorgang stammenden Farbe gelangen. Bei der erneuten Verwendung dieses rückgewonnenen Pulvers kommt es dann - auch wenn der Anteil an Fremdfarbpartikeln minimal ist - zu Fremdfarbpunkten auf der Oberfläche des beschichteten Werkstücks, also zu einer Oberflächenqualität ("Finish") verminderter Qualität. Dies kann auch nicht dadurch verhindert werden, daß man das wiedergewonnene Überschußpulver mit Frischpulver vermischt, weil - wie erwähnt - selbst geringste Mengen an Fremdfarbpartikeln das Finish störend beeinflussen. Weiterhin hat sich gezeigt, daß beim Sprühen mit rückgewonnenem Überschußpulver insbesondere, wenn dieses schon mehrfach rückgeführt worden ist, solche Bereiche der Werkstücke unbefriedigend beschichtet werden, die schon von Hause aus schwierig zu beschichten sind, etwa Bereiche, die im elektrostatischen "Feldschatten" liegen. Grund dafür dürfte zum einen die Anreicherung an Füllstoffpartikeln im zurückgeführten und mehrfach verwendeten Pulver sein, zum anderen die vergleichsweise hohe kinetische Energie der Farbpartikel im aus der Sprühpistole austretenden, einen hohen Luftanteil aufweisenden Pulver-Luft-Sprühstrahl.

Aufgabe der vorliegenden Erfindung ist deshalb das eingangs erwähnte Verfahren in der Weise zu verbessern, daß eine hohe Oberflächengüte ohne Fremdfarbpartikel und ohne unbefriedigend beschichtete Bereiche gewährleistet ist, trotzdem aber die vollständige und gegebenenfalls mehrfache Rückführung und Wiederverwendung von Überschußpulver beibehalten werden kann. Weiterhin ist Aufgabe der Erfindung eine Einrichtung zur Durchführung eines solchen Verfahrens.

Die erfindungsgemäße Lösung ergibt sich verfahrensmäßig aus den kennzeichnenden Merkmalen des Patentanspruchs 1. Einrichtungsmäßig aus den kennzeichnenden Merkmalen des Patentanspruchs 5.

Bei der Erfindung wird also so vorgegangen, daß die zuletzt vom Werkstück erreichte Sprühpistole bzw. die zuletzt vom Werkstück erreichten Sprühpistolen stets mit Frischpulver gespeist werden, mit dem Ergebnis, daß die Oberfläche der Beschichtung stets frei von jeglichen Fremdfarbpartikeln ist. Damit aber spielt es deine Rolle, wie hoch die darunterliegenden Bereiche der Beschichtung mit Fremdfarbpartikeln "verseucht" sind, d.h., die für diesen unteren Bereich zuständige Sprühpistole bzw. Sprühpistolen können unbeschadet mit rückgeführtem Pulver gespeist werden, nämlich auch mehrfach rückgeführtem Pulver, wobei an die Sorgfalt der Reinigung der Pulverkabine beim Farbwechsel auch keine allzu hohen Anforderungen zu stellen sind. Dadurch, daß die für die Oberfläche der Beschichtung verantwortlichen Sprühpistolen ein Pulver-Luft-Gemisch vergleichsweise niedrigen Luftanteils und vergleichsweise niedriger Geschwindigkeit zugeführt wird, ergibt sich darüber hinaus, daß die Pulverteilchen eine niedrige kinetische Energie besitzen, also zwischen Sprühpistole und Werkstück eine "Pulverwolke" entsteht, deren Pulverteilchen nahezu ausschließlich vom elektrostatischen Feld übernommen werden, mit der Folge nicht nur eines hohen Niederschlagswirkungsgrads, sondern auch einer guten Beschichtung der erwähnten schwierigen Werkstücksbereiche. Zweckmäßigerweise soll der den Finish-Sprühpistolen zugeführte Pulver-Luft-Strom einen Luftanteil von lediglich einigen Prozent aufweisen und seine Geschwindigkeit soll nur unwesentlich die Geschwindigkeit übertreffen, die für die Erreichung der Sprühöffnung der Sprühpistole erforderlich ist. Weiterhin ist es vorteilhaft, wenn die Finish-Pistole unmittelbar aus einem Frischpulver-Original-Gebinde gespeist werden, um so sicherzustellen, daß keine Fremdpartikel mitgeführt werden. Um eventuell durch Temperatur und/oder Lagereinflüsse entstandene Verklumpungen im Frischpulver auszuschalten, sollte eine Siebung vorgesehen sein.

Zur Durchführung des Erfindungsverfahrens ist es besonders zweckmäßig, für die Speisung der Finish-Pistolen eine Einrichtung zu verwenden, wie sie im deutschen Patent.... (parallele deutsche Patentanmeldung des gleichen Anmelders mit gleichem Anmeldetag und dem Titel "Einrichtung zum Fluidisieren von in einem Behälter befindlichen Pulver und Abführen fluidisierten Pulvers unmittelbar zu einer Sprühpistole einer elektrostatischen Pulverbeschichtungsanlage") offenbart ist. Diese Einrichtung gewährleistet nämlich, daß den Finish-Sprühpistolen fremdpartikelfreies und klümpchenfreies Frischpulver aus dem Originalgebinde zugeführt wird, und zwar in Form eines Pulver-Luft-Stroms, dessen Luftanteil und dessen Geschwindigkeit sehr niedrig ist. Selbstverständlich kann auch für die Speisung der den Finish-Pistolen vorgeschalteten Sprühpistolen eine Einrichtung gemäß dem erwähnten Patent verwendet werden, wobei die Einrichtung dann in rückgeführtes Pulver eintaucht, jedoch kann das rückgeführte Pulver auch mit anderen Einrichtungen, etwa den bekannten Behältern mit Fluidisierboden, zugeführt werden. Wieviele der in der Sprühkabine vorhandenen Sprühpistolen mit rückgeführtem Pulver und mit Frischpulver gespeist werden, hängt von den jeweiligen Gegebenheiten der Beschichtungsanlagen und den zu besprühenden Werkstücken ab. Sehr gute Ergebnisse wurden bei einer Beschichtungskabine mit acht hintereinander geschalteten Sprühpistolen erreicht, wenn die ersten vier Sprühpistolen mit rückgeführtem Pulver, die restlichen vier Sprühpistolen mit Frischpulver gespeist wurden. Die Rückführung des Pulvers kann dabei unmittelbar zu den entsprechenden Sprühpistolen oder über einen Zwischenlagerungsbehälter erfolgen.

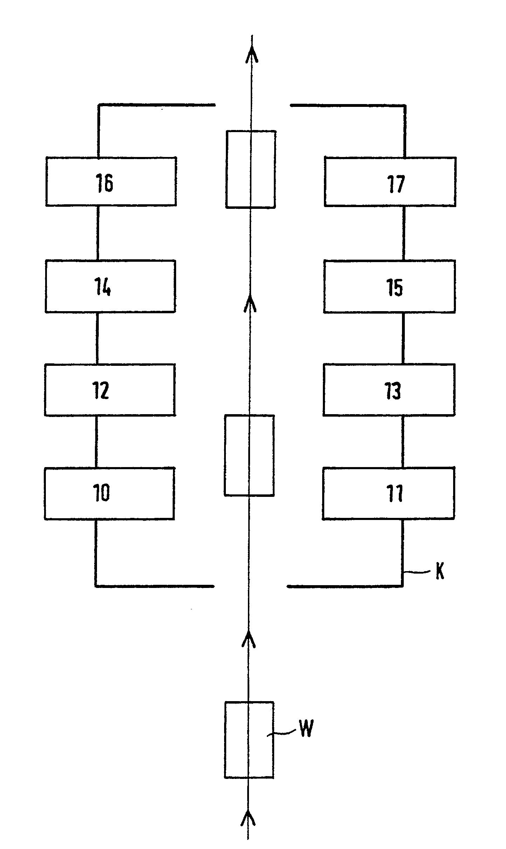

Die beigefügte Zeichnung ist lediglich als Prinzipskizze zu werten. Dabei ist mit K eine Pulverbeschichtungskabine bezeichnet, durch welche Werkstücke W, beispielsweise an einer Kette hängend, hindurchgeführt werden, und zwar in der durch Pfeilspitzen angedeuteten Richtung. Die Kabine K ist mit acht Sprühpistolen 10 bis 17 versehen. Gemäß dem Erfindungsverfahren werden dabei zumindest die Sprühpistolen 10 und 11 mit rückgeführtem Pulver, die Pistolen 16 und 17 mit Frischpulver gespeist. Zweckmäßig ist es, wenn die Pistolen 10, 11, 12 und 13 mit rückgeführtem Pulver, die Pistolen 14, 15, 16 und 17 mit Frischpulver versorgt werden.

**Patentansprüche**

1. Verfahren zum elektrostatischen Beschichten von Werkstücken mit Pulver, bei dem die Werkstücke an mehreren nacheinander angeordneten, mit einem Pulver-Luft-Gemisch gespeisten Sprühpistolen vorbeigeführt werden und versprühtes Überschußpulver für eine erneute Versprühung rückgeführt wird, dadurch gekennzeichnet, daß zumindest die zuerst von den Werkstücken erreichte Sprühpistole mit rückgeführtem Pulver, zumindest die zuletzt von den Werkstücken erreichte Sprühpistole dagegen mit frischem Pulver gespeist wird, und zwar letztere mittels eines Pulver-Luft-Gemisches vergleichsweise geringen Luftanteils und geringer Geschwindigkeit.

2. Verfahren nach Anspruch 1, dadurch gekennzeichnet, daß das Frischpulver in entklumptem und gesiebtem Zustand zugeführt wird.

3. Verfahren nach Anspruch 1 oder 2, dadurch gekennzeichnet, daß das Frischpulver als Pulver-Luft-Gemisch zugeführt wird, dessen Luftanteil unter 10% liegt und dessen Geschwindigkeit nur geringfügig höher als die für den Transport zur Sprühöffnung erforderliche Geschwindigkeit ist.

4. Verfahren nach einem der Ansprüche 1 bis 3, dadurch gekennzeichnet, daß die zuerst von den Werkstücken erreichte Hälfte der vorhandenen Sprühpistolen mit rückgeführtem Pulver, die andere Hälfte der Sprühpistolen mit Frischpulver gespeist wird.

5. Einrichtung zur Durchführung des Verfahrens nach einem der Ansprüche 1 bis 4, mit Sprühpistolen und Vorrichtungen zum Speisen der Sprühpistolen mit einem Pulver-Luft-Gemisch, dadurch gekennzeichnet, daß zumindest die mit Frischpulver gespeisten Sprühpistolen an eine Pulverzuführ-Einrichtung gemäß Patent....- (parallele deutsche Patentanmeldung "Einrichtung zum Fluidisieren von in einem Behälter befindlichen Pulver und Abführen fluidisierten Pulvers unmittelbar zu einer Sprühpistole einer elektrostatischen Pulverbeschichtungsanlage" mit gleichem Anmeldetag) angeschlossen sind.

# EUROPÄISCHER RECHERCHENBERICHT

| EINSCHLÄGIGE DOKUMENTE | | | EP 91103964.2 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl.⁵)** |
| A | EP - A1 - 0 141 778 (RIBNITZ) * Zusammenfassung * -- | 1 | B 05 D 1/06 B 05 B 15/04 |
| A | DE - A1 - 2 930 080 (QUANDEL) * Gesamt * ---- | 1 | |
| | | | **RECHERCHIERTE SACHGEBIETE (Int. Cl.⁵)** |
| | | | B 05 B B 05 C B 05 D |

Der vorliegende Recherchenbericht wurde für alle Patentansprüche erstellt.

| Recherchenort | Abschlußdatum der Recherche | Prüfer |
|---|---|---|
| WIEN | 23-05-1991 | SCHÜTZ |